# EUROPEAN PATENT APPLICATION

(11) **EP 4 345 302 A1**
(43) Date of publication of application: **03.04.2024**
(21) Application number: 22382915.1
(22) Date of filing: 30.09.2022
(51) Int. Cl.: F03D 80/50

(54) **METHOD FOR SERVICING AND/OR OPERATING A WIND TURBINE, METHOD FOR PROVIDING ELECTRICAL ENERGY TO AN ELECTRICITY GRID, LOCKING TOOL, LOCKING ARRANGEMENT AND WIND TURBINE**

(71) Applicant: Siemens Gamesa Renewable Energy Innovation & Technology S.L., 31621 Sarriguren (Navarra) (ES)
(72) Inventor: Durand, Mickael, 31620 Gorraiz (ES); Partera Basurco, Nerea, 01470 Amurrio (ES)
(74) Representative: SGRE-Association

(57) **Abstract**

Method for servicing and/or operating a wind turbine (1), the wind turbine (1) comprising a support structure (7), a rotor (4) having a hub (3) and at least one rotor blade (2), and engagement means (14) being non-rotatably connected to the hub (3), wherein the hub (4) is rotatable mounted to the support structure (7), the method comprising the steps of: providing a locking tool (10) having a mounting part (12) and locking means (13) arranged moveable with respect to the mounting part (12), mounting the locking tool (10) to the support structure (7) such that the mounting part (12) is firmly but removably attached to the support structure (7), moving the locking means (13) to move it into engagement with the engagement means (14), thereby blocking a relative rotation of the hub (3) with respect to the support structure (7), servicing and/or exchanging a serviced component (17, 18) that is mounted directly or indirectly to the rotor (4), moving the locking means (13) out of engagement with the engagement means (14), thereby allowing for a relative rotation between hub (3) and support structure (7), dismounting the locking tool (10) from the support structure (7), and operating the wind turbine (1), in particular to generate electrical energy using a generator (19) of the wind turbine (1) driven by the hub (3), wherein the locking tool (10) is not used for locking the rotor (4) during the operation of the wind turbine (1).

## Description

The invention concerns a method for servicing a wind turbine, a method for providing electrical energy to an electricity grid, a locking tool for blocking the rotation of a hub in a wind turbine and a wind turbine.

In wind turbines it can be necessary to service and/or exchange parts of the wind turbine that are coupled to the rotor of the wind turbine. When working on these parts or disconnecting these parts from further parts, the rotor should typically be locked in place to provide a stable working condition. Therefore, wind turbines typically comprise some kind of rotor locking system integrated in the nacelle to lock the rotor in place when necessary.

A common approach to implement such a rotor locking system is the use of a hydraulic pin that is mounted in a housing of a bearing for the hub. By actuating such a hydraulic pin, the pin can be axially extended approximately parallel to the rotor shaft and engage a hole provided in the hub, therefore, locking a rotation of the hub with respect to the nacelle. The integration of a rotor locking system or more specifically a hydraulic pin for locking the rotor in the wind turbine does however increase the cost and the weight of components mounted on top of the tower and also requires some installation space.

The invention is therefore based on the problem of providing an improved method for servicing a wind turbine, especially for servicing moving parts of a wind turbine, that can avoid or at least reduce the drawbacks of the previously discussed rotor locking system.

The problem is solved by a method for servicing a wind turbine, the wind turbine comprising a support structure, a rotor having a hub and at least one rotor blade, and engagement means being non-rotatably connected to the hub, wherein the hub is rotatable mounted to the support structure, the method comprising the steps of: providing a locking tool having a mounting part and locking means arranged moveable with respect to the mounting part, mounting the locking tool to the support structure such that the mounting part is firmly but removably attached to the support structure, moving the locking means to move it into engagement with the engagement means, thereby blocking a relative rotation of the hub with respect to the support structure, servicing and/or exchanging a serviced component that is mounted directly or indirectly to the rotor, moving the locking means out of engagement with the engagement means, thereby allowing for a relative rotation between hub and support structure, dismounting the locking tool from the support structure, and operating the wind turbine, in particular to generate electrical energy using a generator of the wind turbine driven by the hub, wherein the locking tool is not used for locking the rotor during the operation of the wind turbine.

The invention is based on the idea of implementing the locking tool as a separate part that is only installed in the wind turbine when a locking of the rotor is actually necessary during the servicing. This approach can reduce the cost of the wind turbine, since the same locking tool can be used for servicing multiple wind turbines. At the same time the resulting reduction in weight can reduce wear and tear, e.g., of a pivot-bearing for the support structure or a nacelle comprising the support structure. The removal of the locking mechanism once the servicing is finished also provides additional free space that can, e.g., be used to improve the cooling of the generator of the wind turbine.

The inventive method for servicing a wind turbine is especially advantageous when the rotation of a hub or a shaft that is directly attached to or otherwise coupled to the hub is to be blocked. The hub can support the rotor blades of the wind turbine. Since a relatively large torque can be exerted by the hub or a shaft that is directly connected to the hub, the locking means can be rather large, heavy, and expensive and therefore the inventive approach of normally operating the wind turbine without such locking means is especially advantageous.

Blocking the relative rotation of the hub and the support structure is especially advantageous, when the hub or a shaft coupled to the hub is coupled to a generator or a shaft rotating at a higher speed via a gearbox, that can, e.g., be used to drive the generator at higher rotational speeds. In this case it can become necessary to exchange or service a gearbox or the high-speed shaft coupled to the generator. For this purpose, the rotor and therefore, e.g., the hub and/or the shaft connected to the hub should be locked in place. Therefore, the high-speed shaft can be considered to be the serviced component that is indirectly coupled to the hub and the gearbox can be considered as a serviced component that is directly coupled to the hub or a shaft that is directly coupled to the hub.

The inventive method can however also be applied for servicing a direct drive wind turbine or for directly blocking the rotation of the previously discussed high-speed shaft.

The electrical energy generated during the operation of the wind turbine can be provided to a grid and/or to an electrical energy storage means, e.g., a battery. Additionally or alternatively, the electrical energy can also be used within the wind turbine itself, e.g. for hydrogen generation.

The support structure can also be called main frame. In the context of the present invention, a firm but removeable attachment can be understood to be a temporary attachment and can therefore be distinguished from a permanent attachment of a component during the construction of the wind turbine. The attachment of the locking tool to the support structure can be chosen to be sufficiently firm to withstand the torque of the hub and/or to ensure that the locking means cannot disengage the engagement means due to a movement of the mounting part while the locking tool is mounted to the support structure. At the same time the locking tool can be easily dismountable, e.g., by opening a few screws.

The used locking tool can comprise a retainer, wherein the retainer houses a preconfigured device comprising the locking means and an actuator for moving the locking means or houses the locking means and an actuator for moving the locking means. The retainer and a fixed part of the actuator can form the mounting part of the locking tool or the retainer can be identical to the mounting part. The mounting part can however also be considered to comprise additional parts, e.g., a housing of the preconfigured device and/or a shim discussed below.

The actuator can be a hydraulic actuator, a pneumatic actuator, or an electric actuator.

Locking mechanisms used in known wind turbines often already use preconfigured devices comprising a hydraulic actuator and a pin, that are permanently housed in the bearing housing of a bearing. By providing an attachable retainer, the same, well-known, preconfigured device can be used without the drawbacks of a permanent installation in the wind turbine that were already discussed previously. The inventive method can therefore be implemented with relatively low technical complexity, since it is sufficient to provide an appropriate retainer and appropriate means for mounting the retainer to the support structure.

A mounting surface of the locking tool, that is preferably formed by the retainer, can be mounted directly or via an intermediate component to a mounting surface of the support structure. It can therefore, e.g., be sufficient to provide an appropriate mounting surface on the support structure and engagement means, e.g., a hole for receiving a pin, on a rotatable component, e.g., on the hub, to modify the design of an existing wind turbine to allow the use of the discussed method.

The mounting surfaces of the locking tool and the support structure can be flat surfaces and/or can be arranged at an angle of at least 60°, preferably orthogonal, to the circumferential direction with respect to the rotational axis of the hub. Since the rotation of the hub is to be blocked, large forces typically only need to be absorbed in the circumferential direction of the blocked hub by the locking tool. By using, especially flat, surfaces that are approximately orthogonal to the circumferential direction, these forces can be directly supported by the support structure and the mounting means, e.g. screws, used to attach the mounting surfaces to each other, are not or hardly loaded by a torque of the hub. A slight variance of the orientation with respect to the circumferential direction can, e.g., be caused by a linear shifting of the locking tools, e.g., due to the use of shims discussed below.

The locking tool can be mounted to the support structure by at least one screw, preferably by at least two screws, wherein the respective screw passes through or engages a respective hole of the mounting surface of the locking tool and the mounting surface of the support structure, wherein the respective hole of the mounting surface of the locking tool and/or of the mounting surface of the support structure is slit shaped to allow an adjustment of the relative position of the locking tool and the support structure prior to tightening the screw during the step of mounting of the locking tool to the support structure. As initially discussed, the same locking tool can be used during the servicing of multiple wind turbines. The different wind turbines can be the same or different models but should have at least approximately similar geometry concerning the mounting surface of the support structure provided for mounting the locking tool and the possible positions of the engagement means with respect to this mounting surface. Slight variations in this geometry can be compensated by using the described slit-shaped holes and/or the shims discussed below. The ability to slightly adjust the positioning of the locking tool with respect to the support structure can even be relevant, when the locking tool is only used in a well-defined type of wind turbine, since it might be necessary to compensate for essentially unavoidable tolerances during the construction of the wind turbines leading to slight differences in the geometry of the wind turbines.

Preferably, at least some of the screws pass completely through through-holes of the locking tool and the support structure and can, e.g., engage a respective nut. Additional screws can optionally be used to provide support against a relative rotation of the locking tool and the support structure. This can, e.g., be achieved by free ends of the screw extending beyond the support structure and, e.g., into a blind hole or a blind slit of the locking tool or vice versa.

The use of multiple screws to attach the locking tool to the support structure especially allows to define the relative orientation of the locking tool and the support structure with high precision. Once the screws are inserted an adjustment of the position in the plane defined by the mounting surface of the locking tool and the support structure can be limited to a sliding of the screws within the respective slit. The slit-shaped holes have a diameter in one direction that is closely matching the diameter of the used screws, and that can, e.g., be only 5 % to 10 % larger than the diameter of the screws. The diameter in the direction of the slit can be multiple times larger than the diameter of the screw, therefore, allowing an adjustment of the position of the locking tool in this direction.

The locking tool can be attached to the support structure in such a way, that the direction of maximum extension of the respective slit-shaped hole extends at an angle of at least 60°, preferably orthogonal, to the rotational axis of the hub and/or at an angle of less than 30°, preferably parallel, to the radial direction with respect to the rotational axis of the hub. The described geometry can block a movement of the locking tool in the axial direction, even when the screws should not be sufficiently tightened. This is advantageous, since the locking means is typically axially moved to engage the engagement means and therefore a disengagement of the locking means is robustly blocked, even when the screws are not sufficiently tightened. As mentioned above, the use of slit-shaped holes primarily serves as a means for adjusting the radial position of the locking tool with respect to the support structure to compensate geometric differences between different wind turbines.

At least one, preferably plate-shaped, shim can be arranged as the intermediate component between the mounting surface of the locking tool and the mounting surface of the support structure, wherein the relative position of the locking tool and the support structure can be adjusted during the step of mounting the locking tool to the support structure by choosing the thickness and/or the number of the used shim or shims. Adjusting the number and/or thickness of the used shim or shims can especially serve to adjust the position of the locking tool in the circumferential direction with respect to the hub. By combining the potential use of a shim or shims and the slit-shaped hole used for mounting the locking tool, the position of the locking tool can be adjusted in the radial and in the circumferential direction to better match the present geometry of the wind turbine in which the locking tool is used.

The shim can form at least one slit, wherein the screw or at least one screw used to mount the locking tool to the support structure passes through the slit of the respective shim. The slit in the shim can especially extend to the edge of the shim, therefore allowing an insertion of the shim between the mounting surfaces of the locking tool and the support structure even when these components are already connected by screws that are not yet tightened. The surface area of the shim can approximately match the surface area of the mounting surface of the locking tool. The shim is preferably arranged in such a way, that the slit for the respective screw runs in parallel with the slit-shaped hole of the locking tool or the support structure for the same screw, such that a screw that is shifted along the slit-shaped hole is also shifted along the slit of the shim.

The locking means can be moved in the direction of the rotational axis of the hub to engage the engagement means. Additionally or alternatively, the support structure can be the housing of a hub bearing of the wind turbine and/or the engagement means can be formed by the hub. These features allow for a simple and robust locking of the hub.

The locking means can be a pin and the engagement means can be an opening into which the pin is introduces when the locking means engages the engagement means. An actuator that is moving the pin can, e.g., be rigidly connected to the housing of the hub bearing once the locking tool is installed and the engagement means can be an opening of the outer wall of the hub.

The serviced component can be a gearbox connecting the hub to a generator or to a shaft of the wind turbine, wherein the shaft is preferably coupled to the generator of the wind turbine, and/or the serviced component can be the shaft. As already discussed earlier in this description, locking the rotation of the hub is especially relevant, when servicing or exchanging these components.

Additionally, the invention concerns a method for providing electrical energy to an electricity grid, comprising the steps of: generating electrical energy by a generator of the wind turbine that was serviced using the inventive method for servicing a wind turbine, transmitting the electrical energy through a cable from an offshore location of the wind turbine to an electric receiver station, preferably positioned in an area not belonging to international waters, and transmitting the electrical energy from the electric receiver station into an electricity grid.

The locking tool is not mounted while the electrical energy is generated by the generator. It is especially possible, that the wind turbine does not comprise any permanently mounted means for locking the rotor or hub into position for servicing. The method for servicing a wind turbine can be performed as part of the method for providing electrical energy or the servicing can be seen as preparatory steps that are not part of the method for providing electrical energy.

The invention also concerns a locking tool for blocking the rotation of a hub in a wind turbine with respect to a support structure of the wind turbine, wherein the hub is rotatable mounted to the support structure, wherein the locking tool comprises a mounting part and a locking means that is moveable with respect to the mounting part and that can be moved from a first position into a second position, wherein the locking tool is designed to be mounted to the support structure prior to the servicing and/or exchanging of a serviced component of the wind turbine in such a way, that the locking means engages an engagement means of the wind turbine in the second position to block the rotation of the hub, and to be dismounted after the servicing or exchange.

Features of the locking tool discussed with respect to the previously discussed method for servicing the wind turbine can be used to modify the locking tool, thereby achieving the advantages given above, and vice versa.

Locking arrangement, comprising a locking tool according to the present invention and at least one shim, wherein the relative position of the locking tool and the support structure can be adjusted by choosing whether to arrange a shim between the locking tool and the support structure, and/or by choosing whether to install a single shim or multiple shims between the locking tool and the support structure, and/or by choosing which of several shims of the locking arrangement is installed between the locking tool and the support structure, wherein at least two shims of the locking arrangement have a mutually different thickness.

The invention also concerns a wind turbine comprising a locking tool according to the present invention, wherein the wind turbine is designed to be operated without the locking tool after the servicing and/or exchange of the serviced component is completed. Further features concerning the use of the locking tool and the wind turbine, that were previously discussed with respect to the method for servicing the wind turbine can also be used in the wind turbine according to the present invention to achieve the advantages discussed above and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a flowchart of an exemplary embodiment of a method for servicing a wind turbine according to the present invention,
- Fig. 2: an exemplary embodiment of a wind turbine according to the present invention comprising an exemplary embodiment of a locking tool according to the present invention,
- Fig. 3: a detailed view of the wind turbine and the locking tool shown in fig. 2,
- Fig. 4: a shim useable to adjust the position of a locking tool in an exemplary embodiment of the inventive method for servicing a wind turbine,
- Fig. 5: the locking tool shown in fig. 3 shown in a dismounted state and from a different perspective, and
- Fig. 6: an exemplary embodiment of a method for providing electrical energy to an electricity grid according to the present invention.

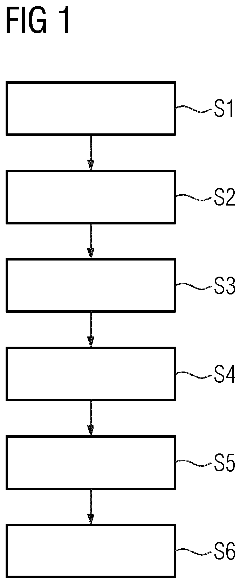

Fig. 1 shows a flowchart of a method for servicing a wind turbine. The flowchart will be discussed with additional reference to fig. 1 that shows an example of a wind turbine 1 that can be serviced by the method.

The serviced wind turbine 1 comprises a rotor 4 that comprises a hub 3 supporting the rotor blades 2. A shaft 5 is coupled to the hub 3 via a gearbox 6 and a further shaft of the rotor 4. The gearbox 6 drives the shaft 5 at a higher speed than the rotational speed of the rotor 4, which can be advantageous for the efficiency of the generator 19. The discussed method can however also be used for servicing directed drive wind turbines. The wind turbine 1 also comprises a support structure 7 that forms a housing for the bearing 8 of the rotor 4 and therefore the hub 3. In the example, the support structure also supports the gearbox 6 and the generator 19.

When servicing or exchanging parts that are rotationally coupled to the hub 3, e.g., when exchanging the gearbox 6 or the shaft 5, the rotation of the hub 3 and therefore of the rotor 4 should be stopped. In principle, it would be possible to use a locking mechanism that is permanently integrated into the wind turbine 1 for this purpose. As already discussed in the general description, this does however increase the cost of the wind turbine 1 and weight carried by the tower 32. Additionally, some installation space is permanently blocked by such a locking mechanism.

Therefore, a different approach is used in the inventive method, wherein a locking tool 10 that is used to block the relative rotation of the rotor 4 and therefore the hub 3 with respect to the support structure 7 is only installed during the servicing of the wind turbine and dismounted afterwards. Therefore, during the normal operation of the wind turbine, the locking tool 10 is not part of the wind turbine and can, e.g., be stored or used to service other wind turbines.

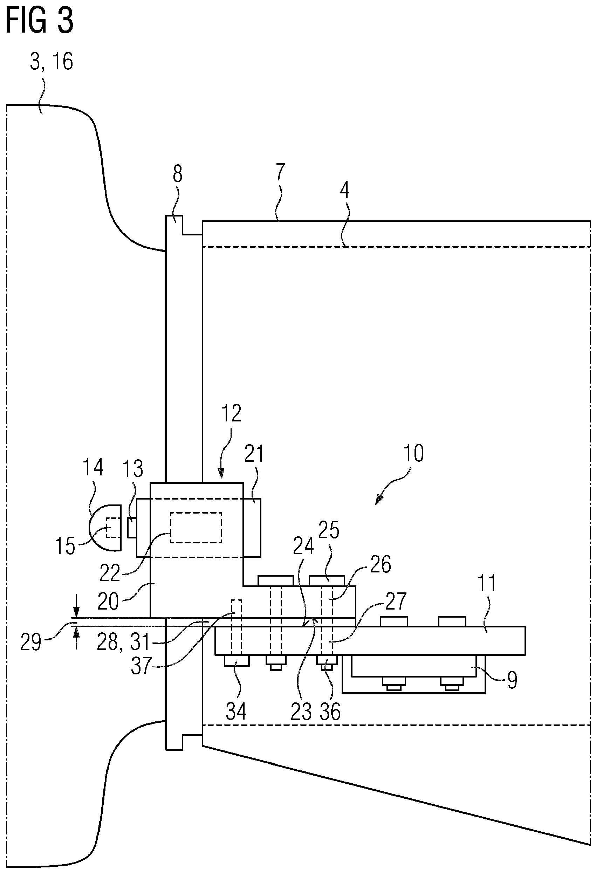

For servicing the wind turbine 1, the locking tool 10 is mounted to the support structure 7 in step S1. A possible approach for mounting the locking tool 10 will now be discussed with additional reference to fig. 3, that shows a detailed view of a part of the support structure 7 forming a housing for the bearing 8 for the hub 3.

The locking tool 10 comprises a mounting part 12 and a locking means 13 that is movable with respect to the mounting part 12. In the example a retainer 20 forms the mounting part 12 and houses a preconfigured device 21 that comprises the locking means 13 and an actuator 22 for actuating the locking means. Such preconfigured devices 21 are commercially available and are, e.g., used in existing wind turbines, where they are permanently integrated directly into the housing of the bearing of the hub to implement a locking mechanism. Alternatively, the actuator 22 and the locking means 13 could be housed as separate components in the retainer 20 or the actuator 22 could be directly mounted to the support structure 7.

In principle, a mounting surface 23 of the retainer 20 could be directly mounted to a mounting surface 24 of the support structure 7. To adjust the position of the retainer 20 and therefore of the locking means 13 with respect to the support structure 7, e.g., to compensate for slightly different geometries of serviced wind turbines, it can be advantageous to insert a shim 28 as an intermediate component 31 between the mounting surfaces 23, 24.

By selecting the height 29 of the used shim 28 or by choosing the number of used shims or the use of no shim, the position of the locking tool 10 and therefore of the locking means 13 can be adjusted in the vertical direction in fig. 3 and therefore at least approximately in the circumferential direction of the hub 3. The adjustment is preferably performed in such a way that the locking means can smoothly engage the engagement means 14 as discussed below.

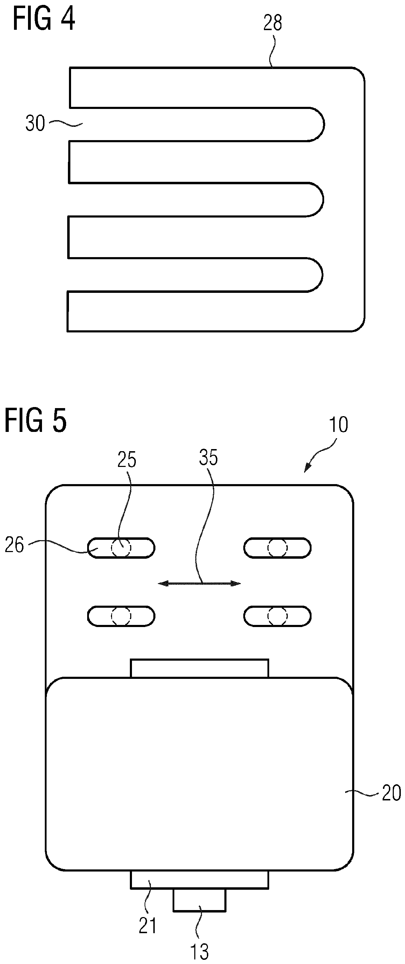

An exemplary shim 28 is shown in fig. 4. The shim 28 can be approximately plate-shaped and comprise slits 30, that allows screws 25, 34 used to attach the locking tool 10 to the support structure 7 to pass through the respective shim 28. The respective slit 30 preferably extends to an edge of the shim 28 to allow the shim 28 to be inserted between the mounting surfaces 23, 24 while the screws 25, 34 are already inserted, but not yet fully tightened.

As shown in fig. 3, screws 25 that are fed through respective holes 26, 27 of the mounting surfaces 23, 24 can be used to attach the locking tool 10 to the support structure 7. The screws 26 can, e.g., engage a respective nut 36. To provide additional support against the tilting of the locking tool 10, additional screws 34 can be inserted into a blind hole 37 of the locking tool 10.

As previously discussed with respect to the shim 28, it can be necessary to adjust the position of the locking tool 10 with respect to the support structure 4 to compensate for geometric variations between wind turbines that are to be serviced using the locking tool 10. Such variations can, e.g., result from tolerances during the construction of the different wind turbines and/or from the use of the locking tool 10 in different models of wind turbines.

It is advantageous when the position of the locking tool 10 can be adjusted in the direction orthogonal to the image plane in fig. 3 and therefore approximately in the radial direction with respect to the rotational axis of the rotor 4. This can, e.g., be achieved by using a slit-shape for the holes 26 of the mounting surface 23 of the locking tool 10. An example of such slit-shaped holes 26 is shown in fig. 5, wherein this figure shows a locking tool 10 before its installation in the wind turbine 1, wherein a top view of the locking tool 10 is shown.

The arrow 35 indicates the direction orthogonal to the image plane in fig. 3. Since the extension of the holes 26 in the direction of the arrow 35 is notably larger than the diameter of the screws 25 that passes through these holes 26, an adjustment of the position of the locking tool 10 and therefore of the locking means 13 in the direction of the arrow 35 is possible while mounting the locking tool 10 to the support structure 7.

In the example the mounting surface 24 of the support structure 7 is formed by a plate-like protrusion 11 that forms a flat mounting surface 24 for the locking tool 10 extending approximately in the radial direction with respect to the rotational axis of the rotor 4. The protrusion 11 is additionally used to connect a protrusion 9 of the bearing 8 to the support structure 7. Therefore, existing structures can be used to attach the locking tool 10 or only slight modifications are necessary to the normal structure of a wind turbine to allow the attachment of the locking tool 10.

Once the locking tool is mounted, the locking means 13 can be actuated, e.g., by sending a control signal or providing a pneumatic or hydraulic pressure of the actuator 22, to move the locking means 13 into an engagement with engagement means 14 that are in the example formed by a hole 15 in a protrusion of the hub 3 and therefore of a rotatable component 16 that is rigidly coupled to the rotor 4. This blocks the rotation of the hub 3 and therefore of the rotor 4. The locking means 13 can especially be a pin that is inserted to the opening 15.

Since the purpose of the locking tool 10 is to block a rotation of the rotor 4, the locking tool 10 needs to be mainly supported against forces in the circumferential direction with respect to the hub 3. It is therefore advantageous, when the mounting surface 24 of the support structure 7 is approximately orthogonal to the circumferential direction as shown in fig. 3. Forces in the circumferential direction for one direction of rotation therefore press the mounting surfaces 23, 24 towards each other and do not or hardly load the screw 25.

As previously discussed, the position of the locking tool 10 can be adjusted due to the shape of the holes 26. Since the diameter of the holes 26 in the axial direction with respect to the axis of rotation of the rotor 4 and therefore in the horizontal direction in fig. 3 approximately matches the diameter of the screws 25, the locking tool 10 cannot be shifted to the right in Fig. 3, therefore pulling the locking means 13 out of engagement with the engagement means 14, even when the screws are not sufficiently tightened.

After locking the rotation of the rotor 4 and therefore also blocking any movement of the gearbox 6 and shaft 5 in step S3, a servicing and/or exchanging of serviced components 17, 18 that are coupled to the rotor 4 can be performed. It is, e.g., possible to exchange the shaft 5 or the gearbox 6 as serviced components 17, 18 in that state.

Once the servicing is finished, the locking means 13 can again be actuated to move it out of engagement with the engagement means 14 in step S4, thereby allowing for a relative rotation of the rotor 4 and the support structure 7.

Afterwards, the locking tool 10 can be unmounted from the support structure in step S5 and in step S6 the normal operation of the wind turbine 1 can be resumed and the generator 19 can be driven by the rotor 4 and the shaft 5 to generate electrical energy.

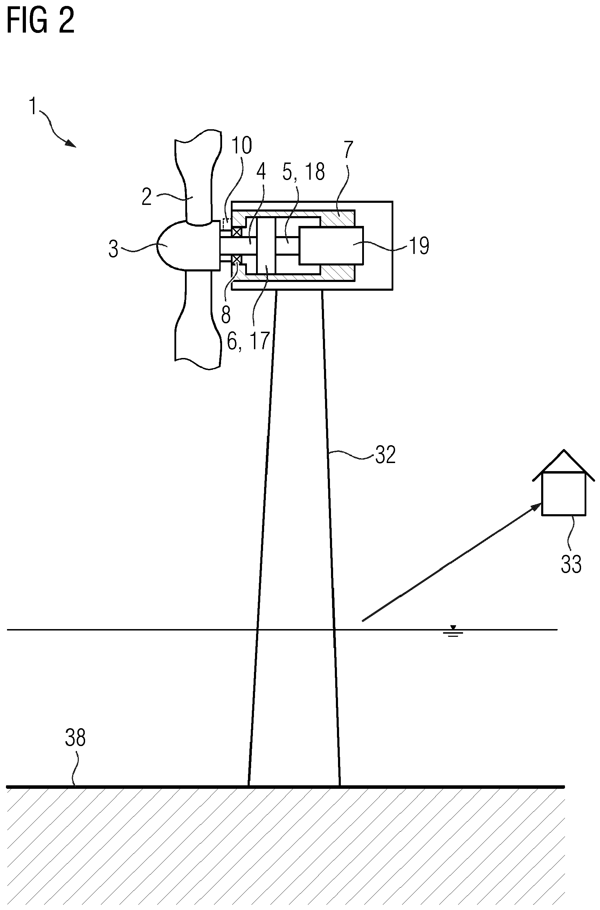

While the described method can be used to service any kind of wind turbine, the exemplary wind turbine 1 shown in fig. 2 is an offshore wind turbine that is mounted to the seafloor 38.

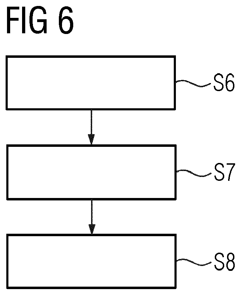

Fig. 6 shows a flowchart of an exemplary method of providing electrical energy to an energy grid (not shown) by such a wind turbine 1.

In step S6 electrical energy is generated by the generator 19 of the wind turbine 1. The step S6 shown in fig. 6 is identical to the step S6 in fig. 1. Therefore, the wind turbine used to generate the electrical energy in step S6 was previously serviced using the previously discussed method.

In step S7 the electrical energy is transmitted through a cable (not shown) from the offshore location shown in fig. 2 to an electric receiver station 33, preferably positioned in an area not belonging to international waters.

In step S8 the electric energy is then transmitted from the electric receiver station into an electricity grid.

Although the present invention has been described in detail with reference to the preferred embodiment, the present invention is not limited by the disclosed examples from which the skilled person is able to derive other variations without departing from the scope of the invention, e.g., by using the method to service a direct drive wind turbine while no shim is used.

## Claims

1. Method for servicing and/or operating a wind turbine (1), the wind turbine (1) comprising a support structure (7), a rotor (4) having a hub (3) and at least one rotor blade (2), and engagement means (14) being non-rotatably connected to the hub (3), wherein the hub (4) is rotatable mounted to the support structure (7), the method comprising the steps of:
providing a locking tool (10) having a mounting part (12) and locking means (13) arranged moveable with respect to the mounting part (12),
mounting the locking tool (10) to the support structure (7) such that the mounting part (12) is firmly but removably attached to the support structure (7),
moving the locking means (13) to move it into engagement with the engagement means (14), thereby blocking a relative rotation of the hub (3) with respect to the support structure (7),
servicing and/or exchanging a serviced component (17, 18) that is mounted directly or indirectly to the rotor (4) ,
moving the locking means (13) out of engagement with the engagement means (14), thereby allowing for a relative rotation between hub (3) and support structure (7),
dismounting the locking tool (10) from the support structure (7), and
operating the wind turbine (1), in particular to generate electrical energy using a generator (19) of the wind turbine (1) driven by the hub (3), wherein the locking tool (10) is not used for locking the rotor (4) during the operation of the wind turbine (1).

2. Method according to claim 1, wherein the used locking tool (10) comprises a retainer (20), wherein the retainer (20) either houses a preconfigured device (21) comprising the locking means (13) and an actuator (22) for moving the locking means (13) or houses the locking means (13) and an actuator (22) for moving the locking means (13).

3. Method according to claim 1 or 2, wherein a mounting surface (23) of the locking tool (10), preferably formed by the retainer (20), is mounted directly or via an intermediate component (31) to a mounting surface (24) of the support structure (7).

4. Method according to claim 3, wherein the mounting surfaces (23, 24) of the locking tool (10) and the support structure (7) are flat surfaces and/or are arranged at an angle of at least 60°, preferably orthogonal, to the circumferential direction with respect to the rotational axis of the hub (3).

5. Method according to claim 3 or 4, wherein the locking tool (10) is mounted to the support structure (7) by at least one screw (25), preferably by at least two screws (25), wherein the respective screw (25) passes through or engages a respective hole (26, 27) of the mounting surface (23) of the locking tool (10) and the mounting surface (24) of the support structure (7),
wherein the respective hole (26, 27) of the mounting surface (23) of the locking tool (10) and/or of the mounting surface (24) of the support structure (7) is slit shaped to allow an adjustment of the relative position of the locking tool (10) and the support structure (7) prior to tightening the screw (25) during the step of mounting of the locking tool (10) to the support structure (7).

6. Method according to claim 5, wherein the locking tool (10) is attached to the support structure (7) in such a way, that the direction of maximum extension of the respective slit-shaped hole (26, 27) extends at an angle of at least 60°, preferably orthogonal, to the rotational axis of the hub (3) and/or at an angle of less than 30°, preferably parallel, to the radial direction with respect to rotational axis of the hub (3).

7. Method according to one of the claims 3 to 6, wherein at least one, preferably plate-shaped, shim (28) is arranged as the intermediate component (31) between the mounting surface (23) of the locking tool (10) and the mounting surface (24) of the support structure (7), wherein the relative position of the locking tool (10) and the support structure (7) can be adjusted during the step of mounting the locking tool (10) to the support structure (7) by choosing the thickness and/or the number of the used shim (28) or shims (28).

8. Method according to claim 7, wherein the shim (28) forms at least one slit (30), wherein the screw (25) or at least one screw (25) used to mount the locking tool (10) to the support structure (7) passes through the slit (30) of the respective shim (28).

9. Method according to one of the preceding claims, wherein the locking means (13) is moved in the direction of the rotational axis of the hub (3) to engage the engagement means (14) and/or wherein the support structure (7) is the housing of a hub bearing (8) of the wind turbine (1) and/or wherein the engagement means (14) is formed by the hub (3).

10. Method according to one of the preceding claims, wherein the locking means (13) is a pin, and the engagement means (14) is an opening (15) into which the pin is introduced when the locking means (13) engages the engagement means (14) .

11. Method according to one of the preceding claims, wherein the serviced component (17, 18) is a gearbox (6) connecting the hub (3) to a generator (19) or to a shaft (5) of the wind turbine (1), wherein the shaft (5) is preferably coupled to the generator (19) of the wind turbine (1), and/or wherein the serviced component (17, 18) is the shaft (5).

12. Method for providing electrical energy to an electricity grid, comprising the steps of:
generating electrical energy by a generator (19) of the wind turbine (1) that was serviced using the method according to one of the preceding steps,
transmitting the electrical energy through a cable from an offshore location of the wind turbine (1) to an electric receiver station (33), preferably positioned in an area not belonging to international waters, and
transmitting the electrical energy from the electric receiver (33) station into an electricity grid.

13. Locking tool for blocking the rotation of a hub (3) in a wind turbine (1) with respect to a support structure (7) of the wind turbine (1), wherein the hub (3) is rotatable mounted to the support structure (7),
wherein the locking tool (10) comprises a mounting part (12) and a locking means (13) that is moveable with respect to the mounting part (12) and that can be moved from a first position into a second position,
wherein the locking tool (10) is designed to be mounted to the support structure (7) prior to the servicing and/or exchanging of a serviced component (17, 18) of the wind turbine (1) in such a way, that the locking means (13) engages an engagement means (14) of the wind turbine in the second position to block the rotation of the hub (3), and to be dismounted after the servicing or exchange.

14. Locking arrangement, comprising a locking tool according to claim 13, and at least one shim (28), wherein the relative position of the locking tool (10) and the support structure (7) can be adjusted
by choosing whether to arrange a shim (28) between the locking tool (10) and the support structure (7), and/or by choosing whether to install a single shim (28) or multiple shims (28) between the locking tool (10) and the support structure (7), and/or
by choosing which of several shims (28) of the locking arrangement is installed between the locking tool (10) and the support structure (7), wherein at least two shims (28) of the locking arrangement have a mutually different thickness.

15. Wind turbine comprising a locking tool according to claim 13, wherein the wind turbine (1) is designed to be operated without the locking tool (10) after the servicing and/or exchange of the serviced component is completed.
